# EUROPÄISCHE PATENTSCHRIFT

(11) **EP 1 369 440 B1**
(45) Veröffentlichungstag und Bekanntmachung des Hinweises auf die Patenterteilung: **29.07.2009**
(21) Anmeldenummer: 03010972.2
(22) Anmeldetag: 16.05.2003
(51) Int. Cl.: C08F 220/04, C08F 222/02

(54) **Verfahren zur Herstellung einer wässrigen Copolymerisatlösung**
Process for preparing an aqueous copolymer solution
Procédé de préparation d'une solution aqueuse d'un copolymère

(30) Priorität: 04.06.2002 DE 10224922
(43) Veröffentlichungstag der Anmeldung: 10.12.2003
(73) Patentinhaber: BASF SE, 67056 Ludwigshafen (DE)
(72) Erfinder: Michl, Kathrin, Dr., 67063 Ludwigshafen (DE); Gerst, Matthias, Dr., 67433 Neustadt (DE); Laubender, Matthias Dr., 67105 Schifferstadt (DE); Faul, Dieter Dr., 67150 Niederkirchen (DE); Raubenheimer, Hans-Jürgen, 68775 Ketsch (DE)

(56) Entgegenhaltungen:
- WO-A-95/09876
- DE-A- 4 311 916
- DE-A- 19 653 524
- DE-A- 19 949 591
- US-A- 5 661 206

## Beschreibung

Die vorliegende Erfindung betrifft ein Verfahren zur Herstellung einer wässrigen Lösung eines Copolymerisats, welches aus
a) 50 bis 99,5 Gew.-% wenigstens einer ethylenisch ungesättigten Mono- und/oder Dicarbonsäure [Monomer A],
b) 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem wenigstens eine Hydroxylgruppe aufweisenden Amin [Monomer B], und optional
c) bis zu 20 Gew.-% wenigstens eines weiteren Monomeren [Monomer C],
in polymerisierter Form aufgebaut ist und das dadurch gekennzeichnet ist, dass die Monomeren A, B und C in wässrigem Medium in Anwesenheit wenigstens eines Schauminhibitors polymerisiert werden.

Die DE-A 19949591 offenbart thermisch aushärtbare Bindemittelzusammensetzungen, welche als wesentliche Komponenten Copolymerisate mit vorgenannter Zusammensetzung sowie wenigstens ein höher funktionelles β-Hydroxyalkylamin und optional ein Tensid enthalten. Die Herstellung der Copolymerisate erfolgt bevorzugt durch radikalisch induzierte Polymerisation der vorgenannten Monomere A, B und C in wässrigem Medium und nachfolgender Abmischung mit dem höher funktionellen β-Hydroxyalkylamin und dem optional eingesetzten Tensid. Die Polymerisationsreaktion erfolgt üblicherweise unter Überdruck. Problematisch an diesem Verfahren ist, dass beim anschließenden Entspannen der gerührten wässrigen Copolymerisatlösung auf Atmosphärendruck häufig starke Schaumbildung auftritt, welche die homogene Abmischung mit den weiteren Komponenten β-Hydroxyalkylamin und Tensid erschwert und die anschließende vollständige Entleerung des Reaktionskessels verzögert. Zur Verkürzung der Reaktorbelegungszeiten wurde daher der gebildete Schaum nachträglich mit Schauminhibitoren reduziert. Nachteilig an diesem Verfahren ist, dass sich die nachträglich zugefügten Schauminhibitoren infolge des vorhandenen Schaums schlecht in die wässrigen Copolymeriatlösungen einrühren lassen, weshalb die Zeitspanne des Schaumabbaus und damit Reaktorbelegungszeiten nicht zu befriedigen vermochte.

Vor dem Hintergrund des vorgenannten Standes der Technik bestand die Aufgabe der Erfindung darin, die Reaktorbelegungszeiten bei der Herstellung vorgenannter wässrigen Copolymeriatlösungen durch Vermeidung oder Verminderung von Schaumbildung zu verkürzen.

Diese Aufgabe wurde durch die eingangs definierte Erfindung gelöst.

Die erfindungsgemäßen Carboxylgruppen enthaltenden Copolymerisate enthalten somit als Monomeren A 50 bis 99,5 Gew.-%, bevorzugt 70 bis 99 Gew.-%, Struktureinheiten eingebaut, die sich von ethylenisch ungesättigten Monocarbonsäuren und ethylenisch ungesättigten Dicarbonsäuren ableiten. Diese Säuren können in dem Copolymerisat auch teilweise oder vollständig in Form eines Salzes vorliegen. Bevorzugt ist die saure Form.

Bei der Herstellung des Carboxylgruppen enthaltenden Copolymerisats kann man neben den vorgenannten Monomeren A auch die Anhydride der ethylenisch ungesättigten Monocarbonsäuren und die Anhydride der ethylenisch ungesättigten Dicarbonsäuren einsetzen.

Besonders bevorzugte Monomere A für die Herstellung der Carboxylgruppen enthaltenden Copolymerisate sind Maleinsäure, Maleinsäureanhydrid, Acrylsäure, Methacrylsäure, Acrylsäureanhydrid, Methacrylsäureanhydrid, Crotonsäure, Itaconsäure und 1,2,3-Tetrahydrophthalsäure, sowie die Alkali- und Ammoniumsalze oder Mischungen davon.

Besonders bevorzugt enthält das Copolymerisat Strukturelemente eingebaut, die sich von Acrylsäure oder einem Gemisch aus Acrylsäure und Maleinsäure im Verhältnis von 95:5 bis 40:60, insbesondere im Verhältnis von 90:10 bis 50:50, ableiten.

Das erfindungsgemäße Copolymerisat enthält ferner als Monomer B 0,5 bis 50 Gew.-%, bevorzugt 1 bis 30 Gew.-%, wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit mindestens einem hydroxylgruppenhaltigen Amin, in einpolymerisierter Form.

Als Komponente der Ester geeignete Monocarbonsäuren sind die zuvor genannten C₃- bis C₁₀-Monocarbonsäuren, insbesondere Acrylsäure, Methacrylsäure, Crotonsäure, und Mischungen davon.

Als Komponenten der Halbester und Diester geeignete Dicarbonsäuren sind die zuvor genannten C₄- bis C₈-Dicarbonsäuren, insbesondere Fumarsäure, Maleinsäure, 2-Methylmaleinsäure, Itaconsäure, und Mischungen davon.

Vorzugsweise ist das Amin mit mindestens einer Hydroxylgruppe ausgewählt unter sekundären und tertiären Aminen, die wenigstens einen C6- bis C₂₂-Alkyl-, C6- bis C₂₂-Alkenyl-, Aryl-C₆-C₂₂-alkyloder Aryl-C₆-C₂₂-alkenylrest aufweisen, wobei die Alkenylgruppe 1, 2 oder 3 nicht benachbarte Doppelbindungen aufweisen kann.

Vorzugsweise ist das Amin hydroxyalkyliert und/oder alkoxyliert. Alkoxylierte Amine weisen vorzugsweise einen oder zwei Alkylenoxidreste mit terminalen Hydroxylgruppen auf. Vorzugsweise weisen die Alkylenoxidreste je 1 bis 100, bevorzugt je 1 bis 50, gleiche oder verschiedene Alkylenoxideinheiten, statistisch verteilt oder in Form von Blöcken auf. Bevorzugte Alkylenoxide sind Ethylenoxid, Propylenoxid und/oder Butylenoxid. Besonders bevorzugt ist Ethylenoxid.

Bevorzugt enthält das Polymerisat eine ungesättigte Verbindung auf Basis einer Aminkomponente, die wenigstens ein Amin der allgemeinen Formel I

R^{c}NR^{a}R^{b} (I)

eingebaut enthält, wobei
- R^{c}: für C₆- bis C₂₂-Alkyl, C6- bis C₂₂-Alkenyl, Aryl-C₆-C₂₂-alkyl oder Aryl-C₆-C₂₂-alkenyl steht, wobei der Alkenylrest 1, 2 oder 3 nicht benachbarte Doppelbindungen aufweisen kann,
- R^{a}: für Hydroxy-C₁-C₆-alkyl oder einen Rest der Formel II

-(CH₂CH₂O)x(CH₂CH(CH₃)0)y-H (II)

steht, wobei
in der Formel II die Reihenfolge der Alkylenoxideinheiten beliebig ist und x und y unabhängig voneinander für eine ganze Zahl von 0 bis 100, bevorzugt 0 bis 50, stehen, wobei die Summe aus x und y > 1 ist,
- R^{b}: für Wasserstoff, C₁- bis C₂₂-Alkyl, Hydroxy-C₁-C₆-alkyl, C₆-bis C₂₂-Alkenyl, Aryl-C₆-C₂₂-alkyl, Aryl-C₆-C₂₂-alkenyl oder C₅- bis C₈-Cycloalkyl steht, wobei der Alkenylrest 1, 2 oder 3 nicht benachbarte Doppelbindungen aufweisen kann,
oder R^{b} für einen Rest der Formel III

-(CH₂CH₂O)ᵥ(CH₂CH(CH₃)O)_{w}-H (III)

steht, wobei
in der Formel III die Reihenfolge der Alkylenoxideinheiten beliebig ist und v und w unabhängig voneinander für eine ganze Zahl von 0 bis 100, vorzugsweise 0 bis 50, stehen.

Bevorzugt steht R^{c} für C₈- bis C₂₀-Alkyl oder C₈- bis C₂₀-Alkenyl, wobei der Alkenylrest 1, 2 oder 3 nicht benachbarte Doppelbindungen aufweisen kann. Vorzugsweise steht R^{c} für den Kohlenwasserstoffrest einer gesättigten oder ein- oder mehrfach ungesättigten Fettsäure. Bevorzugte Reste R^{c} sind z. B. n-Octyl, Ethylhexyl, Undecyl, Lauryl, Tridecyl, Myristyl, Pentadecyl, Palmityl, Margarinyl, Stearyl, Palmitoleinyl, Oleyl und Linolyl.

Bevorzugt handelt es sich bei der Aminkomponente um ein alkoxyliertes Fettamin oder ein alkoxyliertes Fettamingemisch. Besonders bevorzugt sind die Ethoxylate. Insbesondere werden Alkoxylate von Aminen auf Basis natürlich vorkommender Fettsäuren eingesetzt, wie z. B. Talgfettamine, die überwiegend gesättigte und ungesättigte C₁₄-, C₁₆- und C₁₈-Alkylamine enthalten oder Kokosamine, die gesättigte, einfach und zweifach ungesättigte C₆- bis C₂₂-, vorzugsweise C₁₂- bis C₁₄-Alkylamine enthalten. Zur Alkoxylierung geeignete Amingemische sind z. B. verschiedene Armeen ® -Marken der Fa. Akzo oder Noram® -Marken der Fa. Ceca.

Geeignete, kommerziell erhältliche alkoxylierte Amine sind z. B. die Noramox® -Marken der Fa. Ceca, bevorzugt ethoxylierte Oleylamine, wie Noramox® 05 (5 EO-Einheiten), sowie die unter der Marke Lutensol® FA vertriebenen Produkte der Fa. BASF AG.

Die Einpolymerisierung der vorgenannten Ester, Halbester und Diester bewirkt im Allgemeinen eine Verringerung der Grenzflächenspannung der erfindungsgemäßen Zusammensetzungen.

Die Veresterung zur Herstellung der zuvor beschriebenen Ester, Halbester und Diester erfolgt nach üblichen, dem Fachmann bekannten Verfahren. Zur Herstellung von Estern ungesättigter Monocarbonsäuren können die freien Säuren oder geeignete Derivate, wie Anhydride, Halogenide, z. B. Chloride, und (C₁- bis C₄)-Alkylester eingesetzt werden. Die Herstellung von Halbestern ungesättigter Dicarbonsäuren erfolgt bevorzugt ausgehend von den entsprechenden Dicarbonsäureanhydriden. Vorzugsweise erfolgt die Umsetzung in Gegenwart eines Katalysators, wie z. B. eines Dialkyltitanats oder einer Säure, wie Schwefelsäure, Toluolsulfonsäure oder Methansulfonsäure. Die Umsetzung erfolgt im Allgemeinen bei Reaktionstemperaturen von 60 bis 200 °C. Nach einer geeigneten Ausführungsform erfolgt die Umsetzung in Gegenwart eines Inertgases, wie Stickstoff. Bei der Reaktion gebildetes Wasser kann durch geeignete Maßnahmen, wie Abdestillieren, aus dem Reaktionsgemisch entfernt werden. Die Umsetzung kann gewünschtenfalls in Gegenwart üblicher Polymerisationsinhibitoren erfolgen. Die Veresterungsreaktion kann im Wesentlichen vollständig oder nur bis zu einem Teilumsatz durchgeführt werden. Gewünschtenfalls kann eine der Esterkomponenten, vorzugsweise das hydroxylgruppenhaltige Amin, im Überschuss eingesetzt werden. Der Anteil der Esterbildung kann mittels Infrarotspektroskopie ermittelt werden.

Häufig erfolgt die Herstellung der Monomeren B auch dergestalt, dass ein Dicarbonsäureanhydrid mit einem Amin der allgemeinen Formel I in wässrigem Medium unter Inertgasatmosphäre bei einem Druck > Atmosphärendruck, d.h. auch bei einem Druck von ≥ 1,1 bar, ≥ 1,5 bar, ≥ 2 bar,≥ 5 bar (absolut) erfolgen kann, wobei üblicherweise der maximale Reaktionsdruck 7 bar oder 10 bar (absolut) nicht überschreitet.

Nach einer bevorzugten Ausführungsform erfolgt die Herstellung der ungesättigten Ester oder Halbester und deren weitere Umsetzung zu den erfindungsgemäß eingesetzten Copolymerisaten ohne Zwischenisolierung der Ester und vorzugsweise nacheinander im selben Reaktionsgefäß.

Bevorzugt wird zur Herstellung der Copolymerisate ein Umsetzungsprodukt aus einem Dicarbonsäureanhydrid, vorzugsweise Maleinsäureanhydrid, und einem der zuvor beschriebenen hydroxylgruppenhaltigen Amine eingesetzt.

Nach einer geeigneten Ausführungsform enthalten die erfindungsgemäßen Copolymerisate als weiteres Monomer C mindestens eine Verbindung in polymerisierter Form eingebaut, die ausgewählt ist unter Olefinen, bevorzugt Ethen, Propen, n-Buten, Isobuten und/oder Diisobuten, Vinylaromaten, bevorzugt Styrol, Estern α,β-ethylenisch ungesättigter Mono- und/oder Dicarbonsäuren mit C₁- bis C₂₂-Alkanolen, bevorzugt (Meth)acrylsäureestern, und Mischungen davon.

Bevorzugte weitere Monomere C sind
- lineare und verzweigtkettige 1-Olefine oder cyclische Olefine wie z.B. Ethen, Propen, Buten, Isobuten, Diisobuten, Penten, Cyclopenten, Hexen, Cyclohexen, Octen, 2,4,4-Trimethyl-1-penten gegebenenfalls in Mischung mit 2,4,4-Trimethyl-2-penten, C₈- bis C₁₀-Olefin, 1-Dodecen, C₁₂- bis C₁₄-Olefin, Octadecen, 1-Eicosen (C₂₀), C₂₀- bis C₂₄-Olefin; metallocenkatalytisch hergestellte Oligoolefine mit endständiger Doppelbindung, wie z. B. Oligopropen, Oligohexen und Oligooctadecen; durch kationische Polymerisation hergestellte Olefine mit hohem α-Olefin-Anteil, wie z. B. Polyisobuten;
- Ester aus vorzugsweise 3 bis 6 C-Atomen aufweisenden α,β-monoethylenisch ungesättigten Mono- oder Dicarbonsäure, wie Acrylsäure, Methacrylsäure, Maleinsäure, Fumarsäure und Itaconsäure mit C₁- bis C₁₂-, vorzugsweise C₁- bis C₈-Alkanolen. Derartige Ester sind insbesondere Methyl-, Ethyl-, n-Butyl-, Isobutyl-, tert-Butyl-, n-Pentyl-, iso-Pentyl- und 2-Ethylhexylacrylat und/oder -methacrylat;
- vinylaromatischen Verbindungen, bevorzugt Styrol, α-Methylstyrol, o-Chlorstyrol, Vinyltoluolen und Mischungen davon.

Besonders bevorzugte weitere Monomere C sind Ethen, Propen, Isobuten, Diisobuten, Styrol, Methyl(meth)acrylat, Ethyl(meth)acrylat, N-Butyl(meth)acrylat, 2-Ethylhexyl(meth)acrylat und Mischungen davon.

Die Polymerisation der Monomeren A, B und C erfolgt in der Regel in Wasser als Lösungsmittel. Es können jedoch auch mit Wasser mischbare organische Lösungsmittel, wie Alkohole und Ketone, beispielsweise Methanol, Ethanol, n-Propanol, iso-Propanol, n-Butanol, Aceton oder Methylethylketon, bis zu einem Anteil von etwa 30 Vol.-% enthalten sein.

Die Polymerisation wird vorzugsweise in Gegenwart von Radikale bildenden Verbindungen (Initiatoren) durchgeführt. Man benötigt von diesen Verbindungen vorzugsweise 0,05 bis 10, besonders bevorzugt 0,2 bis 5 Gew.-%, bezogen auf die bei der Polymerisation eingesetzten Gesamtmonomerenmenge.

Geeignete Polymerisationsinitiatoren sind beispielsweise Peroxide, Hydroperoxide, Peroxodisulfate, Percarbonate, Peroxoester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid. Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure). Auch die bekannten Redox-Initiatorsysteme wie z. B. H₂O₂/Ascorbinsäure oder tert.-Butylhydroperoxid/Natriumhydroxymethansulfinat, können als Polymerisationsinitiatoren verwendet werden.

Die Initiatoren können allein oder in Mischung untereinander angewendet werden, z. B. Mischungen aus Wasserstoffperoxid und Natriumperoxidisulfat. Für die Polymerisation in wässrigem Medium werden bevorzugt wasserlösliche Initiatoren eingesetzt.

Verfahrenswesentlich ist, dass die Polymerisation der Monomeren A, B und C in wässrigem Medium in Anwesenheit wenigstens eines Schauminhibitors erfolgt. Im Rahmen dieser Schrift werden unter Schauminhibitoren alle diejenigen Verbindungen verstanden, die in der Lage sind, in einem wässrigen Medium, welches das aus den Monomeren A, B, und C gebildete Copolymerisat enthält, die Bildung von Schaum zu verhindern oder zumindest zu reduzieren bzw. bereits gebildeten Schaum abzubauen. Geeignete Verbindungen sind dem Fachmann bekannt (siehe hierzu beispielsweise Ullmann's encyclopedia of industrial chemistry, 5^{th} edition, Vol. A11, Seiten 465 bis 490, VCH Verlagsgesellschaft mbH, Weinheim, 1988 oder Römpp-Lexikon Chemie, 10. Auflage, Band 5, Seite 3953, Georg Thieme Verlag, Stuttgart, 1999 sowie die in beiden Referaten genannten Literaturzitate) oder können von diesem in einfachen Versuchen, beispielsweise in Anlehnung an die DIN 53902 Teil 2, ermittelt werden.

Als Schauminhibitoren können insbesondere Verbindungen eingesetzt werden, die ausgewählt sind unter Silikonölen, insbesondere Dimethylpolysiloxanen, wie beispielsweise TEGO Antifoam® 730 (Marke der Fa. Goldschmidt), Phosphorsäureestern, wie beispielsweise Degressal® SD 40 oder Etingal® S (Marken der Fa. BASF AG), Fettalkoholalkoxylaten, wie beispielsweise Degressal® SD 20, Degressal® SD 21 oder Degressal® SD 22, Degressal® SD 23 oder Lumiten® E 3065 (Marken der Fa. BASF AG), sogenannten Ethylenoxid/Propylenoxid-Blockcopolymeren, insbesondere ethoxylierte Polypropylenglykole oder propoxylierte Polyethylenglykole, wie beispielsweise die Pluronic® PE- oder Pluronic® RPE-Marken der Fa. BASF AG sowie ethoxylierten oder propoxylierten Mono-, Di- oder Polyaminen, wie beispielsweise die Tetronic® RED-Marken der Fa. BASF AG.

Die Gesamtmenge an eingesetztem Schauminhibitor beträgt häufig 0,001 bis 5 Gew.-Teile und oft 0,005 bis 2 Gew.-Teile bzw. 0,01 bis 1 Gew.-Teile, jeweils bezogen auf 100 Gew.-Teile der Gesamtmonomerenmenge.

In einer bevorzugten Ausgestaltungsform des erfindungsgemäßen Verfahrens wird
i) Monomer B durch Umsetzung wenigstens einer der vorgenannten ethylenisch ungesättigten Monocarbonsäuren oder einem Derivat davon und/oder wenigstens einer der vorgenannten ethylenisch ungesättigten Dicarbonsäuren oder einem Derivat davon mit einem wenigstens eine Hydroxylgruppe aufweisenden Amin der allgemeinen Formel I in einer Veresterungsreaktion hergestellt, und anschließend
ii) das Umsetzungsprodukt aus Schritt i) in wässrigem Medium in Anwesenheit von wenigstens einem Schauminhibitor mit wenigstens einem Monomer A und/oder dessen Anhydrid und gegebenenfalls wenigstens einem Monomer C polymerisiert.

Die in Schritt i) optional eingesetzten Derivate der ethylenisch ungesättigten Mono- und/oder Dicarbonsäuren sind vorteilhaft die Anhydride der entsprechenden Mono- und/oder Dicarbonsäuren.

Im erfindungsgemäßen Verfahren kann vorteilhaft gegebenenfalls eine Teilmenge des wenigstens einen Schauminhibitors gemeinsam mit Monomer B in einem Reaktionsgefäß vorlegt und die Gesamtmenge bzw. die gegebenenfalls verbliebene Restmenge des wenigstens einen Schauminhibitors gemeinsam mit Monomer A sowie optional Monomer C während der Polymerisationsreaktion zugeführt, insbesondere kontinuierlich zugeführt werden. Es ist aber auch möglich, die Gesamtmenge des wenigstens einen Schauminhibitors gemeinsam mit Monomer B in einem Reaktionsgefäß vorzulegen und Monomer A sowie optional Monomer C während der Polymerisationsreaktion zuzugeben, insbesondere kontinuierlich zuzugeben.

Die erhaltenen wässrigen Copolymerisatlösungen weisen üblicherweise einen Feststoffgehalt ≥ 5 bis≤ 70 Gew.-%, häufig ≥ 20 bis ≤ 60 Gew.-% und oft > 30 bis < 50 Gew.-%, jeweils bezogen auf die wässrigen Copolymerisatlösungen auf.

Die nach dem erfindungsgemäßen Verfahren zugänglichen wässrigen Lösungen der aus den Monomeren A, B und C aufgebauten Copolymerisate können, wie in der DE-A 19949591 offenbart, zu thermisch aushärtbaren Bindemittelzusammensetzungen, welche als wesentliche Komponenten ein Copolymerisat mit vorgenannter Zusammensetzung sowie wenigstens ein höher funktionelles β-Hydroxyalkylamin und optional ein Tensid sowie weitere Zusätze enthalten, abgemischt und zur Herstellung von Formkörpern eingesetzt werden.

Die nachfolgenden, nicht einschränkenden Beispiele erläutern die Erfindung.

Die Viskosität der Zusammensetzungen wurde in einem Viskosimeter der Fa. Brookfield (Gerät DV 2) bei 23 °C und 60 Upm mit einer Spindel der Größe 2 oder 3 bestimmt.

Die Messung des pH-Wertes erfolgte mit einer Einstabmesskette.

### Beispiel 1

Polymerisat aus 3 Teilen Carbonsäuremonomeren und 1 Teil ethoxyliertes Oleylamin

In einem Druckreaktor (Ankerrührer, 2 Zulaufstellen) wurden 152,0 kg vollentsalztes Wasser, 67,3 kg Maleinsäureanhydrid, 0,88 kg TEGO Antifoam® 730 (Entschäumer der Fa. Goldschmidt) sowie 221,6 kg Lutensol® FA 12 (ethoxyliertes Oleylamin der Fa. BASF AG) vorgelegt. Bei Bedarf wurden 0,3 Gew.-% (bezogen auf die Gesamtmenge der Monomeren) an phosphorhaltigen anorganischen Säuren als Korrosionsinhibitor zugesetzt.

Unter Stickstoffatmosphäre wurde auf 120 bis 125 °C erwärmt. Nach Erreichen dieser Temperatur wurden innerhalb 4 Stunden Zulauf 1, bestehend aus 174,6 kg vollentsalztem Wasser und 186,0 kg Acrylsäure sowie innerhalb 5 Stunden Zulauf 2, bestehend aus 34,4 kg vollentsalztem Wasser und 21,3 kg einer 30 gew.-%igen wässrigen Lösung von Wasserstoffperoxid, gleichmäßig zudosiert. Nach Beendigung von Zulauf 1 wurden dem Reaktionsansatz weitere 28,8 kg vollentsalztes Wasser zugegeben. Während der Polymerisation wurde der Druck durch vorsichtiges Entspannen bei 2 bis 3 bar gehalten. Nach dem Ende der Reaktion wurde der Reaktionsansatz auf Atmosphärendruck entspannt und auf 30 bis 35 °C abgekühlt, wofür ca. 15 Minuten benötigt wurden. Anschließend führte man dem Reaktionsansatz 114,0 kg Triethanolamin unter Kühlen zu.

Die fertige Polymerlösung wies einen pH-Wert von 3,5 und eine Viskosität von 598 mPa^{*}s auf und konnte innerhalb von 10 Minuten über einen Filter in Behälter abgefüllt werden.

### Beispiel 2

Polymerisat aus 3 Teilen Carbonsäuremonomeren und 1 Teil ethoxyliertes Oleylamin

In einem Druckreaktor (Ankerrührer, 2 Zulaufstellen) wurden 152,0 kg vollentsalztes Wasser, 67,3 kg Maleinsäureanhydrid sowie 221,6 kg Lutensol® FA 12 vorgelegt. Bei Bedarf wurden 0,3 Gew.-% (bezogen auf die Gesamtmenge der Monomeren) an phosphorhaltigen anorganischen Säuren als Korrosionsinhibitor zugesetzt.

Unter Stickstoffatmosphäre wurde auf 120 bis 125 °C erwärmt. Nach Erreichen dieser Temperatur wurden innerhalb 4 Stunden Zulauf 1, bestehend aus 174,6 kg vollentsalztem Wasser, 186,0 kg Acrylsäure und 0,88 kg TEGO Antifoam® 730 sowie innerhalb 5 Stunden Zulauf 2, bestehend aus 34,4 kg vollentsalztem Wasser und 21,3 kg einer 30 gew.-%igen wässrigen Lösung von Wasserstoffperoxid, gleichmäßig zudosiert. Nach Beendigung von Zulauf 1 wurden dem Reaktionsansatz weitere 28,8 kg vollentsalztes Wasser zugegeben. Während der Polymerisation wurde der Druck durch vorsichtiges Entspannen bei 2 bis 3 bar gehalten. Nach dem Ende der Reaktion wurde der Reaktionsansatz auf Atmosphärendruck entspannt und auf 30 bis 35 °C abgekühlt, wofür ca. 15 Minuten benötigt wurden. Anschließend führte man dem Reaktionsansatz 114,0 kg Triethanolamin unter Kühlen zu.

Die fertige Polymerlösung wies einen pH-Wert von 3,5 und eine Viskosität von 584 mPa*s auf und konnte innerhalb von 10 Minuten über einen Filter in Behälter abgefüllt werden.

### Vergleichsbeispiel (ohne Schauminhibitor)

In einem Druckreaktor (Ankerrührer, 2 Zulaufstellen) wurden 152,0 kg vollentsalztes Wasser, 67,3 kg Maleinsäureanhydrid sowie 221,6 kg Lutensol® FA 12 vorgelegt. Bei Bedarf wurden 0,3 Gew.-% (bezogen auf die Gesamtmenge der Monomeren) an phosphorhaltigen anorganischen Säuren als Korrosionsinhibitor zugesetzt.

Unter Stickstoffatmosphäre wurde auf 120 bis 125 °C erwärmt. Nach Erreichen dieser Temperatur wurde innerhalb 4 Stunden Zulauf 1, bestehend aus 174,6 kg vollentsalztem Wasser und 186,0 kg Acrylsäure sowie innerhalb 5 Stunden Zulauf 2, bestehend aus 34,4 kg vollentsalztem Wasser und 21,3 kg einer 30 gew.-%igen wässrigen Lösung von Wasserstoffperoxid, gleichmäßig zudosiert. Nach Beendigung von Zulauf 1 wurden dem Reaktionsansatz weitere 28,8 kg vollentsalztes Wasser zugegeben. Während der Polymerisation wurde der Druck durch vorsichtiges Entspannen bei 2 bis 3 bar gehalten. Nach dem Ende der Reaktion wurde der Reaktionsansatz auf Atmosphärendruck entspannt und auf 30 bis 35 °C abgekühlt. Infolge starker Schaumentwicklung konnte der Entspannungsvorgang nur langsam und unter ständiger Beobachtung der Schaumentwicklung erfolgen. Insgesamt wurden für den Entspannungsvorgang und das Abkühlen ca. 45 Minuten benötigt. Anschließend führte man dem Reaktionsansatz 114,0 kg Triethanolamin unter Kühlen zu.

Die fertige Polymerlösung wies einen pH-Wert von 3,5 und eine Viskosität von 595 mPa^{*}s auf und konnte innerhalb von 50 Minuten über einen Filter in Behälter abgefüllt werden.

## Patentansprüche

1. Verfahren zur Herstellung einer wässrigen Lösung eines Copolymerisats, welches aus
a) 50 bis 99,5 Gew.-% wenigstens einer ethylenisch ungesättigten Mono- und/oder Dicarbonsäure [Monomer A],
b) 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem wenigstens eine Hydroxylgruppe aufweisenden Amin [Monomer B], und optional
c) bis zu 20 Gew.-% wenigstens eines weiteren Monomeren [Monomer C],
in polymerisierter Form aufgebaut ist, **dadurch gekennzeichnet, dass** die Monomeren A, B und C in wässrigem Medium in Anwesenheit wenigstens eines Schauminhibitors polymerisiert werden.

2. Verfahren nach Anspruch 1, **dadurch gekennzeichnet, dass** das Copolymerisat als ethylenisch ungesättigte Mono- und/oder Dicarbonsäure wenigstens eine Verbindung in polymerisierter Form enthält, die ausgewählt ist unter C₃- bis C₁₀-Monocarbonsäuren und C₄- bis C₈-Dicarbonsäuren, vorzugsweise Acrylsäure, Methacrylsäure, Crotonsäure, Fumarsäure, Maleinsäure, 2-Methylmaleinsäure und Itaconsäure.

3. Verfahren nach Anspruch 2, **dadurch gekennzeichnet, dass** das Copolymerisat als ethylenisch ungesättigte Mono- und/oder Dicarbonsäure, Acrylsäure oder ein Gemisch aus Acrylsäure und Maleinsäure oder -anhydrid im Molmengenverhältnis von 95:5 bis 40:60, bevorzugt 90:10 bis 50:50, in polymerisierter Form enthält.

4. Verfahren nach einem der Ansprüche 1 bis 3, **dadurch gekennzeichnet, dass** das eine Hydroxylgruppe aufweisende Amin ausgewählt ist unter Aminen der allgemeinen Formel I
R^{c}NR^{a}R^{b} (I),
wobei
R^{c} für C₆- bis C₂₂-Alkyl, C₆- bis C₂₂-Alkenyl, Aryl-C₆-C₂₂-alkyl oder Aryl-C₆-C₂₂-alkenyl steht, wobei der Alkenylrest 1, 2 oder 3 nicht benachbarte Doppelbindungen aufweisen kann,
R^{a} für Hydroxy-C₁-C₆-alkyl oder einen Rest der Formel II
-(CH₂CH₂O)x₍CH₂CH(CH₃)O)_{y}-H (II)
steht, wobei
in der Formel II die Reihenfolge der Alkylenoxideinheiten beliebig ist und x und y unabhängig voneinander für eine ganze Zahl von 0 bis 100 stehen, wobei die Summe aus x und y > 1 ist,
R^{b} für Wasserstoff, C₁- bis C₂₂-Alkyl, Hydroxy-C₁-C₆-alkyl, C₆- bis C₂₂-Alkenyl, Aryl-C₆-C₂₂-alkyl, Aryl-C₆-C₂₂-alkenyl oder C₅- bis C₈-Cycloalkyl steht, wobei der Alkenylrest 1, 2 oder 3 nicht benachbarte Doppelbindungen aufweisen kann,
oder R^{b} für einen Rest der Formel III
-(CH₂CH₂O)ᵥ(CH₂CH(CH₃)O)_{w}-H (III)
steht, wobei
in der Formel III die Reihenfolge der Alkylenoxideinheiten beliebig ist und v und w unabhängig voneinander für eine ganze Zahl von 0 bis 100 stehen,
und Mischungen davon.

5. Verfahren nach einem der Ansprüche 1 bis 4, **dadurch gekennzeichnet, dass** das Copolymerisat als Monomer C wenigstens eine Verbindung in polymerisierter Form enthält, die ausgewählt ist unter Ethen, Propen, n-Buten, Isobuten und/oder Diisobuten, Vinylaromaten, bevorzugt Styrol, Estern α,β-ethylenisch ungesättigter Mono- und/oder Dicarbonsäuren mit C₁- bis C₂₂-Alkanolen, bevorzugt (Meth)acrylsäureestern, und Mischungen davon.

6. Verfahren nach einem der Ansprüche 1 bis 5, **dadurch gekennzeichnet, dass** die Polymerisationsreaktion in Anwesenheit von 0,001 bis 5 Gew.-Teilen wengistens eines Schauminhibitors, bezogen auf 100 Gew.-Teile der Gesamtmonomerenmenge, erfolgt.

7. Verfahren nach einem der Ansprüche 1 bis 6, **dadurch gekennzeichnet, dass** als wenigstens ein Schauminhibitor eine Verbindung eingesetzt wird, die ausgewählt ist unter Siliconölen, Phosphorsäureestern, Fettalkoholalkoxylaten, Ethylenoxid/Propylenoxid-Blockcopolymeren oder alkoxylierten Mono-, Di- oder Polyaminen.

8. Verfahren nach einem der Ansprüche 1 bis 7, **dadurch gekennzeichnet, dass**
i) Monomer B durch Umsetzung wenigstens einer ethylenisch ungesättigten Monocarbonsäure oder einem Derivat davon und/oder wenigstens einer ethylenisch ungesättigten Dicarbonsäure oder einem Derivat davon mit einem wenigstens eine Hydroxylgruppe aufweisenden Amin in einer Veresterungsreaktion hergestellt, und anschließend
ii) das Umsetzungsprodukt aus Schritt i) in wässrigem Medium in Anwesenheit von wenigstens einem Schauminhibitor mit wenigstens einem Monomer A und/oder dessen Anhydrid und gegebenenfalls wenigstens einem Monomer C polymerisiert wird.

9. Verfahren nach Anspruch 8, **dadurch gekennzeichnet, dass** gegebenenfalls eine Teilmenge des wenigstens einen Schauminhibitors gemeinsam mit Monomer B in einem Reaktionsgefäß vorlegt und die Gesamtmenge bzw. die gegebenenfalls verbliebene Restmenge des wenigstens einen Schauminhibitors gemeinsam mit Monomer A sowie optional Monomer C während der Polymerisationsreaktion zugeführt wird.

10. Verfahren nach Anspruch 8, **dadurch gekennzeichnet, dass** die Gesamtmenge des wenigstens einen Schauminhibitors gemeinsam mit Monomer B in einem Reaktionsgefäß vorgelegt und Monomer A sowie optional Monomer C während der Polymerisationsreaktion zugeführt wird.

11. Verfahren nach einem der Ansprüche 1 bis 9, **dadurch gekennzeichnet, dass** die Polymerisationsreaktion radikalisch initiiert wird.

## Claims

1. A process for preparing an aqueous solution of a copolymer made up of
a) from 50 to 99.5% by weight of at least one ethylenically unsaturated monocarboxylic and/or dicarboxylic acid [monomer A],
b) from 0.5 to 50% by weight of at least one ethylenically unsaturated compound selected from esters of ethylenically unsaturated monocarboxylic acids and monoesters and diesters of ethylenically unsaturated dicarboxylic acids with an amine containing at least one hydroxyl group [monomer B], and optionally
c) up to 20% by weight of at least one further mononer [monomer C],
in polymerized form, which comprises polymerizing monomers A, B and C in an aqueous medium in the presence of at least one foam inhibitor.

2. The process according to claim 1, wherein the copolymer comprises as ethylenically unsaturated monocarboxylic and/or dicarboxylic acid in polymerized form at least one compound selected from C₃ to C₁₀ monocarboxylic and C₄ to C₈ dicarboxylic acids, preferably acrylic, methacrylic, crotonic, fumaric, maleic, 2-methylmaleic, and itaconic acid.

3. The process according to claim 2, wherein the copolymer comprises as ethylenically unsaturated monocarboxylic and/or dicarboxylic acid in polymerized form acrylic acid or a mixture of acrylic acid and maleic acid or maleic anhydride in a molar ratio of from 95:5 to 40:60, preferably from 90:10 to 50:50.

4. The process according to any of claims 1 to 3, wherein the amine containing a hydroxyl group is selected from amines of the formula I
R^{c}NR^{a}R^{b} (I),
where
R^{c} is C₆ to C₂₂ alkyl, C₆ to C₂₂ alkenyl, aryl-C₆-C₂₂ alkyl or aryl-C₆-C₂₂ alkenyl, the alkenyl radical having 1, 2 or 3 nonadjacent double bonds,
R^{a} is hydroxy-C₁-C₆ alkyl or a radical of the formula II
- (CH₂CH₂O) ₓ (CH₂CH (CH₃) O)_{y}-H (II)
where
the sequence of the alkylene oxide units is arbitrary and x and y independently are each an integer from 0 to 100, and the sum of x and y is > 1,
R^{b} is hydrogen, C₁ to C₂₂ alkyl, hydroxy-C₁-C₆ alkyl, C₆ to C₂₂ alkenyl, aryl-C₆-C₂₂ alkyl, aryl-C₆-C₂₂ alkenyl or C₅ to C₈ cycloalkyl, the alkenyl radical having 1, 2 or 3 nonadjacent double bonds,
or R^{b} is a radical of the formula III
- (CH₂CH₂O)ᵥ(CH₂CH(CH₃)O)_{w}-H (III)
where
the sequence of the alkylene oxide units is arbitrary and v and w independently are each an integer from 0 to 100,
and mixtures thereof.

5. The process according to any of claims 1 to 4, wherein the copolymer comprises as monomer C in polymerized form at least one compound selected from ethene, propene, n-butene, isobutene and/or diisobutene, vinyl aromatics, preferably styrene, esters of (α,β-ethylenically unsaturated monocarboxylic and/or dicarboxylic acids with C₁ to C₂₂ alkanols, preferably (meth)acrylic esters, and mixtures thereof.

6. The process according to any of claims 1 to 5, wherein the polymerization reaction takes place in the presence of from 0.001 to 5 parts by weight of at least one foam inhibitor per 100 parts by weight of the total monomer amount.

7. The process according to any of claims 1 to 6, wherein said at least one foam inhibitor is a compound selected from silicone oils, phosphoric esters, fatty alcohol alkoxylates, ethylene oxide/propylene oxide block copolymers, and alkoxylated monoamines, diamines, and polyamines.

8. The process according to any of claims 1 to 7, wherein
i) monomer B is prepared by reacting at least one ethylenically unsaturated monocarboxylic acid or derivative thereof and/or at least one ethylenically unsaturated dicarboxylic acid or derivative thereof with an amine containing at least one hydroxyl group in an esterification reaction and then
ii) polymerizing the reaction product from step i) in an aqueous medium in the presence of at least one foam inhibitor with at least one monomer A and/or its anhydride and, if desired, at least one monomer C.

9. The process according to claim 8, wherein a portion if desired of said at least one foam inhibitor is charged to a reaction vessel together with monomer B and the entirety or, where appropriate, remainder of said at least one foam inhibitor is supplied together with monomer A and optionally monomer C during the polymerization reaction.

10. The process according to claim 8, wherein the entirety of said at least one foam inhibitor is charged to a reaction vessel together with monomer B, while monomer A and optionally monomer C are supplied during the polymerization reaction.

11. The process according to any of claims 1 to 9, wherein the polymerization reaction is free-radically initiated.

## Revendications

1. Procédé pour la préparation d'une solution aqueuse d'un copolymère, qui est constituée par
a) 50 à 99,5% en poids d'au moins un acide monocarboxylique et/ou dicarboxylique éthyléniquement insaturé [monomère A],
b) 0,5 à 50% en poids d'au moins un composé éthyléniquement insaturé, qui est choisi parmi les esters d'acides monocarboxyliques éthyléniquement insaturés et les semi-esters et les diesters d'acides dicarboxyliques éthyléniquement insaturés avec au moins une amine présentant un groupe hydroxyle [monomère B], et éventuellement
c) jusqu'à 20% en poids d'au moins un autre monomère [monomère C],
sous forme polymérisée, **caractérisé en ce que** les monomères A, B et C sont polymérisés en milieu aqueux en présence d'au moins un inhibiteur de mousse.

2. Procédé selon la revendication 1, **caractérisé en ce que** le copolymère contient, comme acide monocarboxylique et/ou dicarboxylique éthyléniquement insaturé au moins un composé sous forme polymérisée, qui est choisi parmi les acides monocarboxyliques en C₃ à C₁₀ et les acides dicarboxyliques en C₄ à C₈, de préférence l'acide acrylique, méthacrylique, crotonique, fumarique, maléique, 2-méthylmaléique et itaconique.

3. Procédé selon la revendication 2, **caractérisé en ce que** le copolymère contient, comme acide monocarboxylique et/ou dicarboxylique éthyléniquement insaturé, de l'acide acrylique ou un mélange d'acide acrylique et d'acide ou d'anhydride maléique dans un rapport de quantités molaires de 95:5 à 40:60, de préférence de 90:10 à 50:50, sous forme polymérisée.

4. Procédé selon l'une quelconque des revendications 1 à 3, **caractérisé en ce qu'**une amine présentant un groupe hydroxyle est choisie parmi les amines de formule générale I
R^{c}NR^{a}R^{b} (I)
où
R^{c} représente un groupe C₆-C₂₂-alkyle, C₆-C₂₂-alcényle, aryl-C₆-C₂₂-alkyle ou aryl-C₆-C₂₂-alcényle, le radical alcényle pouvant présenter 1, 2 ou 3 doubles liaisons non adjacentes,
R^{a} représente hydroxy-C₁-C₆-alkyle ou un radical de formule II
-(CH₂CH₂O)ₓ(CH₂CH(CH₃)O)_{y}-H (II)
où
dans la formule II, l'ordre des unités d'oxyde d'éthylène est quelconque et x et y représentent, indépendamment l'un de l'autre, un nombre entier de 0 à 100, la somme de x et y étant > 1,
R^{b} représente hydrogène, C₁-C₂₂-alkyle, hydroxy-C₁-C₆-alkyle, C₆-C₂₂-alcényle, aryl-C₆-C₂₂-alkyle, aryl-C₆-C₂₂-alcényle ou C₅-C₈-cycloalkyle, le radical alcényle pouvant présenter 1, 2 ou 3 doubles liaisons non adjacentes,
ou R^{b} représente un radical de formule III
- (CH₂CH₂O) ᵥ (CH₂CH (CH₃) O) -H (III)
où
dans la formule III, l'ordre des unités d'oxyde d'éthylène est quelconque et v et w représentent, indépendamment l'un de l'autre, un nombre entier de 0 à 100,
et leurs mélanges.

5. Procédé selon l'une quelconque des revendications 1 à 4, **caractérisé en ce que** le copolymère contient comme monomère C au moins un composé sous forme polymérisée, qui est choisi parmi éthylène, propène, n-butène, isobutène et/ou diisobutène, les aromatiques de vinyle, de préférence le styrène, les esters d'acides monocarboxyliques et/ou dicarboxyliques éthyléniquement α,β-insaturés avec des C₁-C₂₂-alcanols, de préférence les esters de l'acide (mêth)acrylique, et leurs mélanges.

6. Procédé selon l'une quelconque des revendications 1 à 5, **caractérisé en ce que** la réaction de polymérisation est réalisée en présence de 0,001 à 5 parties en poids d'au moins un inhibiteur de mousse, par rapport à 100 parties en poids de la quantité totale de monomères.

7. Procédé selon l'une quelconque des revendications 1 à 6, **caractérisé en ce qu'**on utilise comme au moins un inhibiteur de mousse un composé qui est choisi parmi les huiles de silicone, les esters de l'acide phosphorique, les alcoxylates d'alcool gras, les copolymères à blocs d'oxyde d'éthylène/d'oxyde de propylène ou les monoamines, les diamines ou les polyamines alcoxylées.

8. Procédé selon l'une quelconque des revendications 1 à 7, **caractérisé en ce qu'**on
i) prépare le monomère B par transformation d'au moins un acide monocarboxylique éthyléniquement insaturé ou un dérivé de celui-ci et/ou d'au moins un acide dicarboxylique éthyléniquement insaturé ou un dérivé de celui-ci avec au moins une amine présentant un groupe hydroxyle dans une réaction d'estérification, puis
ii) on polymérise le produit de transformation de l'étape i) en milieu aqueux en présence d'au moins un inhibiteur de mousse avec au moins un monomère A et/ou son anhydride et le cas échéant au moins un monomère C.

9. Procédé selon la revendication 8, **caractérisé en ce qu'**on dispose le cas échéant une quantité partielle dudit au moins un inhibiteur de mousse ensemble avec le monomère B dans un récipient de réaction et on alimente la quantité totale ou le cas échéant la quantité résiduelle dudit au moins un inhibiteur de mousse ensemble avec le monomère A ainsi qu'éventuellement le monomère C pendant la réaction de polymérisation.

10. Procédé selon la revendication 8, **caractérisé en ce qu'**on dispose la quantité totale dudit au moins un inhibiteur de mousse ensemble avec le monomère B dans un récipient de réaction et on alimente le monomère A ainsi qu'éventuellement le monomère C pendant la réaction de polymérisation.

11. Procédé selon l'une quelconque des revendications 1 à 9, **caractérisé en ce que** la réaction de polymérisation est initiée par voie radicalaire.
